(19) Europäisches Patentamt
European Patent Office
Office européen des brevets

(11) **EP 2 583 599 B1**

(12) **EUROPÄISCHE PATENTSCHRIFT**

(45) Veröffentlichungstag und Bekanntmachung des Hinweises auf die Patenterteilung:
**18.12.2013 Patentblatt 2013/51**

(51) Int Cl.:
*A47J 39/00* *(2006.01)*   *F24C 7/08* *(2006.01)*
*A47J 27/14* *(2006.01)*

(21) Anmeldenummer: **12189358.0**

(22) Anmeldetag: **19.10.2012**

(54) **Verfahren zum automatischen Befüllen eines Gargeräts sowie Gargerät hierfür**

Method for automatically filling a cooking device and cooking device for the same

Procédé de remplissage automatique d'un appareil de cuisson et appareil de cuisson à cet effet

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2011 DE 102011116271**
**19.10.2011 DE 102011116272**

(43) Veröffentlichungstag der Anmeldung:
**24.04.2013 Patentblatt 2013/17**

(73) Patentinhaber: **MKN Maschinenfabrik Kurt Neubauer GmbH & Co. KG**
**38300 Wolfenbüttel (DE)**

(72) Erfinder:
• **Helm, Peter, Dipl.-Ing.**
**38304 Wolfenbüttel (DE)**
• **Socher, Michael, Dipl.-Ing. (FH)**
**47249 Duisburg (DE)**
• **Ruhe, Dirk, Dipl.-Ing. (FH)**
**38667 Bad Harzburg (DE)**

(74) Vertreter: **Strobel, Wolfgang et al**
**Kroher-Strobel**
**Rechts- und Patentanwälte**
**Bavariaring 20**
**80336 München (DE)**

(56) Entgegenhaltungen:
**EP-A1- 1 716 795    EP-A1- 2 301 392**

**Beschreibung**

Die vorliegende Erfindung betrifft ein Verfahren zum automatischen Befüllen eines Gargeräts sowie ein Gargerät, das insbesondere für die Durchführung des Verfahrens geeignet ist.

Professionelle Gargeräte, insbesondere solche für Großküchen und Gastronomie, die einen Tiegel oder ein Kochgefäß aufweisen, werden häufig mit Wasserbefülleinrichtungen und entsprechenden -armaturen ausgestattet. Dies erleichtert die Befüllung des Gargefäßes, da die Nennvolumina (maximale Fluideinfüllmenge) in der Regel 50 l oder auch deutlich mehr betragen. Die Geräte sind fest installierte und stationäre Gargeräte, wobei ein manuelles Befüllen, wie bei Haushaltsgeräten, nicht praxistauglich ist. Um einen besseren Komfort und eine entsprechende Zeitersparnis für den Benutzer, insbesondere den Koch in der Gastronomie oder in Großküchen, zu erreichen, werden die professionellen Gargeräte mit elektronisch gesteuerten Wasserbefülleinrichtungen ausgestattet, bei denen man über eine Eingabevorrichtung eine Mengenangabe, in der Regel in Litern, eingeben kann. Die Eingabevorrichtung ist mit einer Befüllelektronik verbunden, wobei nach Eingabe des gewünschten Volumens die Befüllung automatisch erfolgt. Dies geschieht üblicherweise dadurch, dass ein Volumenstromzähler die Wassermenge misst und die Steuerelektronik die Daten des Sensors auswertet und diese mit der eingegebenen Menge vergleicht. Wenn die eingefüllte Menge der Sollmenge entspricht, wird der Wasserzufluss gestoppt. Die EP 17 16 795A beschreibt ein ähnliches Garverfahren für eine Garvorrichtung.

Vorteilhafterweise ist die Befüllelektronik als Teil der gesamten Gargerätesteuerung ausgebildet. Professionelle Gargeräte weisen in der Regel eine elektronische Gerätesteuerung auf, die eine Heizeinrichtung und weitere Aktoren steuert. Diese Gerätesteuerungen weisen in der Regel einen Permanentspeicher auf, in dem komplette Garabläufe gespeichert werden können. Als Beispiel kann so ein Garprogramm folgenden Inhalt aufweisen: 1. Garschritt: *Befüllen des Gargefäßes mit 100 l Wasser* 2. Garschritt: *Kochen des Inhalts des Gargefäßes während 30 min.*

Die Bedienungsperson kann durch Aufrufen und Starten eines solchen Garprogramms durch wenige und einfache Handgriffe komplexe Garabläufe ablaufen lassen. In der Praxis gibt es Garprogramme, die eine Vielzahl von einzelnen Garschritten aufweisen können. Die Gerätesteuerungen sind so konzipiert, dass die Bedienungsperson über die bereits gespeicherten Garprogramme selbst Garprogramme eingeben und speichern kann. Außerdem weisen Steuerungen in der Regel Schnittstellen auf, so dass die erstellten Garprogramme auf Datenträger übertragen werden können bzw. über Netzwerkanbindungen (kabelgebunden oder drahtlos) auf andere Geräte übertragen werden können. Dadurch ist es der Bedienungsperson leicht möglich, die Garprogramme auf weitere Gargeräte zu übertragen, ohne sie auf dem jeweiligen Gerät neu erstellen zu müssen. Dies ist insbesondere bei räumlich getrennten Gargeräten, beispielsweise bei Filialbetrieben, vorteilhaft.

Da moderne Gargerätesteuerungen, die mit großflächigen farbigen Bildschirmen und Touchsensoren ausgestattet sind und eine entsprechende Steuerungselektronik benötigen, verhältnismäßig teuer sind, wurden vorteilhafterweise Gargeräte konzipiert, bei denen eine Gerätesteuerung mehrere Gartiegel steuern kann. Dies kann so erfolgen, dass eine Zentralsteuerung mehrere Geräte steuert, oder dass mehrere Gargefäße und/oder Kochbehälter in einem Gerät integriert sind. Bei solchen Gerätekombinationen hat sich als sinnvoll erwiesen, dass die einzelnen Gargefäße unterschiedliche Volumina aufweisen. Dies hat den Vorteil, dass bei geringerem Bedarf das kleinere Gargefäß verwendet werden kann und entsprechende Energie eingespart wird.

Das Verhältnis der Volumina unterschiedlicher Gargefäße kann bei professionellen Gargeräten in einem Verhältnis von 1:10 liegen. Dadurch ist es dem Anwender nicht möglich, Garprogramme mit absoluten Voluminaangaben auf andere Tiegelgrößen zu übertragen. Vielmehr muss der Anwender durch Kenntnis der maximalen Volumina des jeweiligen Tiegels und Rechenoperationen das Garprogramm entsprechend anpassen. Dass dies besonders nachteilig im Hinblick auf den hektischen Betrieb in Küchen lässt sich unschwer erkennen.

Aufgabe der vorliegenden Erfindung ist es, ein Verfahren zum automatischen Befüllen eines Gargefäßes eines Gargeräts zu schaffen, mit dem eine im Wesentlichen automatische Anpassbarkeit des Befüllens an die jeweilige Größe des Gargefäßes des Gargeräts, insbesondere bei Übertragung von einem Gargerät auf ein anderes unterschiedlicher Größe ermöglicht wird. Weiterhin ist es Aufgabe der vorliegenden Erfindung, ein entsprechendes Gargerät vorzuschlagen, mit dem ein automatisches Befüllen durch Anpassen an die Größe des Gargefäßes ermöglicht wird.

Diese Aufgaben werden durch die Merkmale der Ansprüche 1, 3 bzw. 8 gelöst.

In einer Ausführungsform der Erfindung weist das erfindungsgemäße Verfahren zum automatischen Befüllen eines Gargefäßes eines Gargeräts, das einen für Fluide geeigneten Garraum aufweist, wobei das Gargerät eine elektronische Gerätesteuerung aufweist, die einen Permanentspeicher aufweist, in dem Garabläufe gespeichert werden können und in dem das Nennvolumen des Gargeräts abgespeichert ist, und das eine steuerbare Fluidbefülleinrichtung aufweist, die zur Befüllung des Garraums mit der entsprechenden Flüssigkeitsmenge dient, die folgenden Schritte auf:

- Auswählen und Speichern des Befüllgrades des Gargefäßes relativ zum Nennvolumen des Gargefäßes,
- Errechnen der Sollmenge der gewünschten Befüllung durch Multiplizieren des Nennvolumens mit dem relativen Befüllgrad, und

- Übermitteln des errechneten Sollmengenwertes an die Fluidbefülleinrichtung.

Mit anderen Worten, die Füllmenge lässt sich gemäß folgender Formel berechnen:

Formel (1):

Füllmenge [l] = Nennvolumen [l] x relativer Befüllgrad.

So lässt sich bei einem Nennvolumen von 150 l und einem gewünschten Befüllgrad von 50 % die Füllmenge mit 75 l errechnen.

In einer weiteren Ausführungsform der Erfindung weist das erfindungsgemäße Verfahren zum automatischen Befüllen eines Gargefäßes eines Gargeräts, das einen für Fluide geeigneten Garraum aufweist, wobei das Gargerät eine elektronische Gerätesteuerung aufweist, die einen Permanentspeicher aufweist, in dem Garabläufe gespeichert werden können und in dem das Nennvolumen des Gargeräts abgespeichert ist, und das eine steuerbare Fluidbefülleinrichtung aufweist, die zur Befüllung des Garraums mit der entsprechenden Flüssigkeitsmenge dient, die folgenden Schritte auf:

- Auswählen und Speichern der absoluten Befüllmenge des Gargefäßes in einem Garprogramm,
- Übertragen des absoluten ausgewählten Befüllmengenwertes in die Gerätesteuerung bzw. in das entsprechende Garprogramm eines weiteren Gargerätes,
- wobei ein neuer absoluter Befüllmengenwert in Abhängigkeit des Nennvolumens des weiteren Gargerätes errechnet wird, sofern sich das Nennvolumen des weiteren Gargerätes vom Nennvolumen des vorherigen Gargerätes unterscheidet, und
- Übermitteln des, gegebenenfalls neuen, absoluten Mengenwertes an die Fluidbefülleinrichtung.

Mit Hilfe des erfindungsgemäßen Verfahrens ist es möglich, die Befüllung des Garraums mit der entsprechenden Flüssigkeitsmenge bei unterschiedlichen Gargeräten mit unterschiedlichen Gargefäßen automatisch zu berechnen, ohne dass die Bedienungsperson eigene Berechnungen vornehmen muss. Dies führt vorteilhafterweise zu einer sehr sicheren Betriebsweise der Gargeräte und zu einem sicheren Garergebnis der behandelten Nahrungsmittel.

Vorteilhafterweise kann die Befüllmenge als absolute Füllhöhe des Gargefäßes gespeichert werden, wodurch auch bei Übertragung auf ein Gargerät mit einem unterschiedlichen Gargefäß, die für den Garprozess notwendige Füllhöhe errechnet und eingehalten werden kann.

Weiterhin ist vorteilhaft, dass die gewünschte Befüllmenge durch die Gerätesteuerung auf Plausibilität überprüft wird. Eine bei einem großen Gargefäß eingestellte Befüllmenge, kann bei einem deutlich kleineren Gargefäß dazu führen, dass bei unveränderter Befüllung das eingefüllte Fluid überläuft. Durch Plausibilitätsüberprüfung kann die Gerätesteuerung ermitteln, ob die gewünschte Befüllmenge für das Gargefäß geeignet ist oder nicht. Die Gargerätesteuerung kann dann eine entsprechende Anpassung fordern.

Weiterhin ist vorteilhaft, dass bei Überschreiten der möglichen Füllhöhe eine Warnmeldung ausgegeben wird und dem Benutzer die Gelegenheit gegeben wird, das Garprogramm zu editieren. Dadurch kann eine ungeeignete Füllhöhe im Gargefäß vermieden werden.

Weiterhin ist vorteilhaft, dass die Daten des einen Gargefäßes auf die Gerätesteuerung eines zweiten Gargefäßes übertragen werden können, bei dem, sofern das Nennvolumen des zweiten Gargefäßes vom Nennvolumen des ersten Gargefäßes abweicht, eine entsprechende Anpassung der Füllmengenwerte durchgeführt wird. Durch diese automatische Anpassung wird ein erheblicher zeitlicher Vorteil für die Bedienungsperson erreicht, da sie den Garprozess an das Gargefäß des nachfolgnden Gargeräts nicht mehr anpassen muss, da dies vom nachfolgenden Gargerät selbst vorgenommen wird.

Die vorliegende Erfindung umfasst auch ein Gargerät mit wenigstens einem Gargefäß, insbesondere in Form eines Tiegels, das einen für Fluide geeigneten Garraum aufweist, und das insbesondere zur Durchführung des erfindungsgemäßen Verfahrens geeignet ist, wobei es eine elektronische Gerätesteuerung aufweist, die einen Permanentspeicher aufweist, in dem Garabläufe gespeichert werden können. Das Gargefäß weist eine Fluid-, insbesondere Wasserbefülleinrichtung auf, die zur Befüllung des Garraums mit der entsprechenden Flüssigkeitsmenge dient. Erfindungsgemäß ist in der Gerätesteuerung das Nennvolumen des Gargefäßes gespeichert, wird in der Gerätesteuerung in einem Befüllschritt des Garprogramms der Befüllgrad relativ zum Nennvolumen des Gargefäßes oder die absolute Befüllmenge gespeichert, errechnet die Gerätesteuerung die Sollmenge der gewünschten Befüllung durch Multiplizieren des Nennvolumens mit dem relativen Befüllgrad, der in dem Garprogramm gespeichert wurde, und übermittelt diesen Wert oder die direkt eingegebene Befüllmenge an die Fluidbefülleinrichtung.

Weiterhin ist vorteilhaft, dass die Befüllmenge als absolute Füllhöhe des Gargefäßes gespeichert wird. Damit wird für die Bedienungsperson die geforderte Füllhöhe für den Garprozess sichergestellt.

Gemäß der vorliegenden Erfindung ist weiterhin vorteilhaft, dass die Gerätesteuerung die gewünschte Befüllmenge auf Plausibilität überprüft.

Weiterhin ist vorteilhaft, dass bei Überschreiten der möglichen Füllhöhe das Gargerät eine Warnmeldung ausgibt und dem Benutzer die Gelegenheit gibt, das Garprogramm zu editieren. Damit wird auf sichere Weise ein Überfüllen des Gargefäßes vermieden.

Bei dem erfindungsgemäßen Gargerät ist weiterhin vorteilhaft, dass, wenn es ein zweites Gargefäß aufweist, das ein zum ersten Gargefäß unterschiedliches Nennvolumen aufweist, die Befüllmenge entsprechend dem gewünschten Befüllgrad für das zweite Gargefäß von der Gerätesteuerung errechnet und dieser Wert der Fluidbefülleinrichtung übermittelt wird.

Vorteilhafterweise weist das erfindungsgemäße Gargerät eine Medienschnittstelle auf, die zum Empfang externer Daten geeignet ist, wobei nach Empfang der Daten des gewünschten Befüllgrades diese mit dem Nennvolumen des Gargefäßes abgeglichen werden und die Gerätesteuerung ein entsprechendes Signal an die Fluidbefülleinrichtung ausgibt.

Alternativ kann das erfindungsgemäße Gargerät die gewünschte durch Übertragung externer Daten eingegebene Befüllmenge mit dem Nennvolumen des Gargefäßes überprüfen und, sofern die gewünschte Befüllmenge das Nennvolumen des Gargefäßes übersteigt, ein entsprechendes Signal ausgeben.

Vorteilhafterweise weist das erfindungsgemäße Gargerät, das wenigstens eine Bedien- und Anzeigeeinrichtung, bevorzugt ausgebildet als Touchscreen, aufweist, eine Darstellung des Wasserzulaufs auf, die verschiedene Einstellmöglichkeiten umfasst:

- Temperatur des Zulaufwassers, und/oder
- relative Befüllmengeneinstellung über Anteile der maximalen Befüllung, und/oder
- absolute Befüllmengeneinstellung durch die Eingabe per Liter, und/oder
- Befüllmengeneinstellung durch Eingabe des gewünschten Füllstands im Garraum.

Dabei kann vorteilhafterweise die Darstellung des Wasserzulaufs animiert und/oder walzenähnlich erfolgen.

Weitere Einzelheiten, Merkmale und Vorteile der vorliegenden Erfindung ergeben sich aus der nachfolgenden Beschreibung eines Ausführungsbeispiels anhand der beigefügten Zeichnungen. Darin zeigt:

Fig. 1 in schematischer perspektivischer Ansicht ein erfindungsgemäßes Gargerät, welches geeignet ist, das erfindungsgemäße Verfahren auszuführen;

Fig. 2 ein Flussdiagramm, das die Schritte des Erstellens eines Garprogramms von Anfang bis Ende darstellt;

Fig. 3 ein Flussdiagramm, das die Übertragung eines Garprogramms vom Anfang bis Ende darstellt; und

Fig. 4 die Darstellung des Wasserzulaufs auf dem Anzeigefeld.

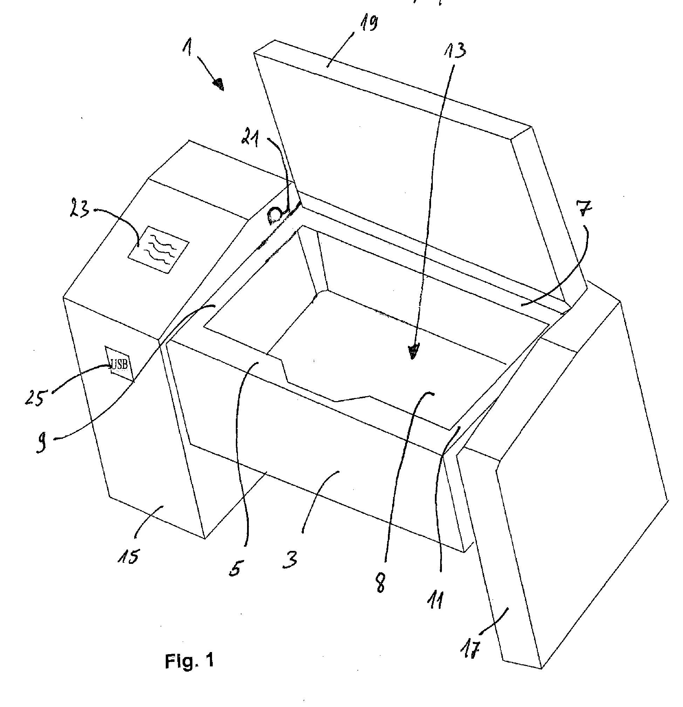

In Fig. 1 ist ein erfindungsgemäßes Gargerät 1 in perspektivischer Ansicht schematisch dargestellt. Das Gargerät 1 weist ein Gargefäß 3 auf, das als Tiegel ausgebildet ist. Das Gargefäß 3 weist eine Vorderwand 5, eine Rückwand 7, eine linke Seitenwand 9, eine rechte Seitenwand 11 sowie einen Boden 8 auf. Diese Elemente bilden einen Garraum 13, in dem Nahrungsmittel behandelt werden können, und der entsprechend mit Fluid, insbesondere Wasser befüllt werden soll.

Zum Verschließen des Garraums 13 dient ein Deckel 19, der in Fig. 1 in geöffneter Position dargestellt ist. Die Fluid- bzw. Wasserbefülleinrichtung ist schematisch mit  Bezugsziffer 21 dargestellt, das heißt, eine Öffnung 21 einer Zuführleitung befindet sich in einem linken Rahmenelement 15 oberhalb der Seitenwand 9, die entsprechend von einer Gerätesteuerung (nicht dargestellt) gesteuert werden kann.

Das Gargefäß 3 ist drehbar zwischen dem linken Rahmenelement 15 und einem rechten Rahmenelement 17 gelagert, wobei das linke Rahmenelement 15 ein Bedienfeld 23 aufweist, das in Verbindung mit der Gerätesteuerung des Gargeräts 1 steht. Weiterhin ist in dem linken Rahmenelement 15 ein Medienanschluss 25 vorgesehen, über den von außen externe Daten in die Gerätesteuerung des Gargeräts 1 eingebracht und interne Daten des Gargeräts 1 ausgelesen werden können.

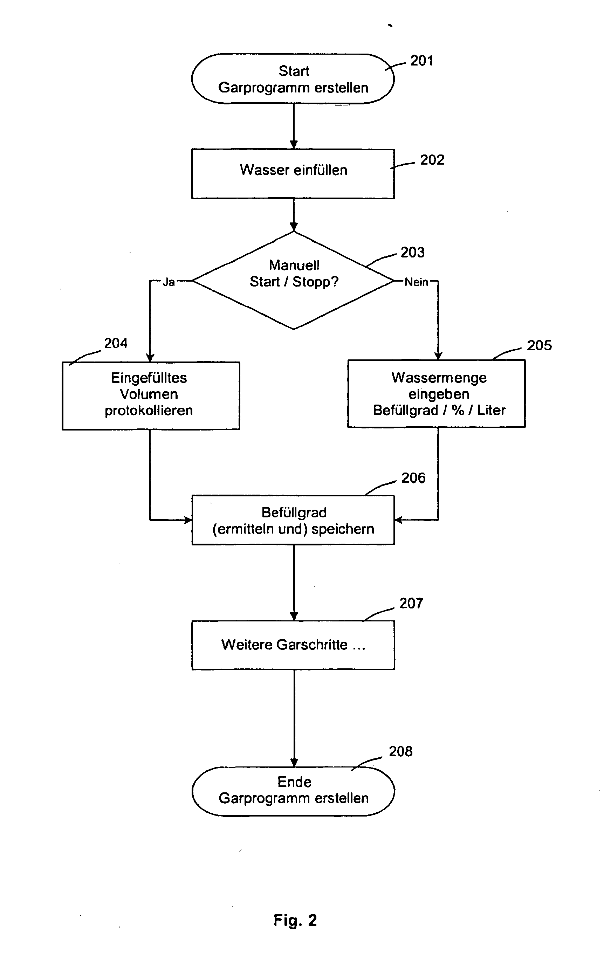

In Fig. 2 ist in einem Flussdiagramm das Erstellen eines Garprogramms schematisch dargestellt. In einem Schritt 201 wird die Erstellung des Garprogramms gestartet, woran sich der Programmschritt 202 *Wasser Einfüllen* anschließt. In einem Schritt 203 wird manuell das *Wasser Einfüllen* gestartet bzw. gestoppt.Dem Bediener werden hier somit mehrere Oprtionen gegeben. Erkann manuell Wassereinlassen und nach Gutdünken die Befüllung vornehmen.

Die dann eingelassene Wassermenge bzw. das eingefüllte Volumen kann dann im positiven Entscheidungsfalle im Schritt 204 protokolliert werden und steh im Garprogramm zurVerfügung. Im negativen Falle wird in einem Schritt 205 die Wassermenge oder der Befüllgrad absolut oder relativ eingegeben.

Im Schritt 206 wird der Befüllgrad gespeichert.

Daran können sich in einem Schritt 207 weitere Garschritte anschließen und danach wird im Schritt 208 die Erstellung des Garprogramms beendet.

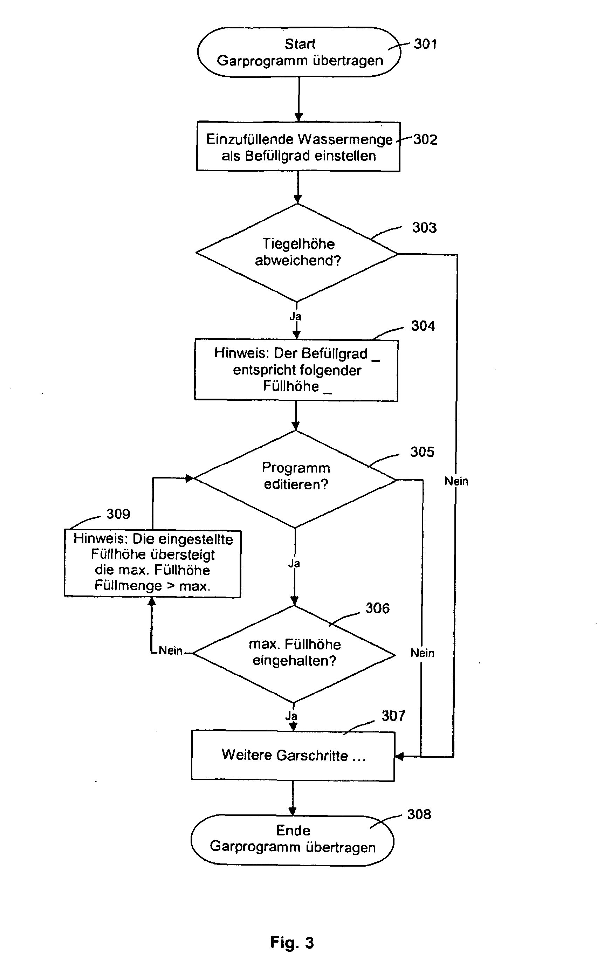

In Fig. 3 ist ein Flussdiagramm dargestellt, das die Übertragung des erstellten Garprogramms, beispielsweise gemäß Fig. 2, darstellt. Die Übertragung des Garprogramms beginnt in einem Startschritt 301. In einem Schritt 302 wird die einzufüllende Wassermenge als Befüllgrad eingestellt. Sollte die Tiegelhöhe von der bisherigen Tiegelhöhe abweichend sein, wird in einem Schritt 304 eine entsprechende Umrechnung vorgenommen. Sollte sich dabei ergeben, dass die Füllhöhe zu hoch ist, kann in einem Schritt 305 das Programm erneut editiert werden. Danach wird im positiven Falle in einem Schritt 306 überprüft, ob die maximale Füllhöhe eingehalten ist. Ist dies der Fall, kann in einem Schritt 307 die Einbringung weiterer Garschritte erfolgen.

Wird die maximale Füllhöhe im Schritt 306 nicht eingehalten, ergeht der Hinweis gemäß Schritt 309, dass die eingestellte Füllhöhe die maximale Füllhöhe übersteigt. Eine entsprechende Korrektur muss dann erneut im Schritt 305 erfolgen.

Der Schritt 308 zeigt das Ende des Vorgangs *Garprogramm Übertragen.*

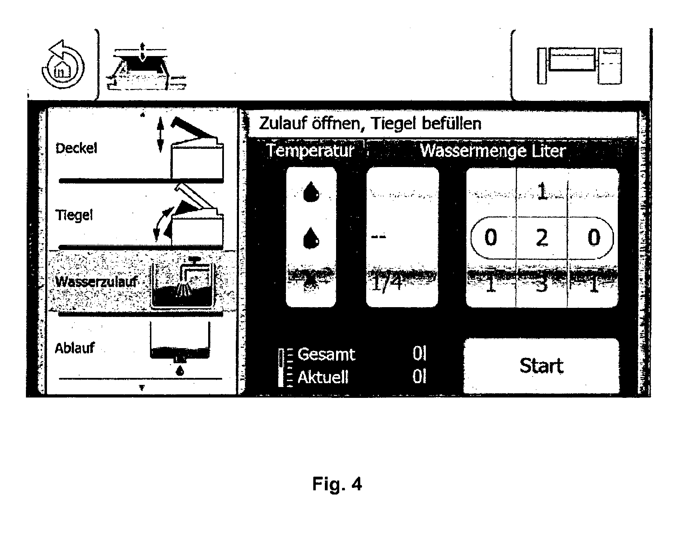

Bezug nehmend auf Fig. 4 wird nachfolgend die Darstellung im Anzeigefeld der Gerätesteuerung beschrieben.

Im linken Feld werden durch Scrollen Programmschritte "eingeschoben", die gemäß Fig. 4 die Programmschritte: Bewegen des Deckels, Schwenken des Tiegels, Wasserzufuhr und Ablauf umfassen. Durch die kleinen Pfeile oben und unten wird angedeutet dass weitere Programmschritte durch Scrollen nach oben oder unten angewählt werden können. Durch Antippen wurde der Programmschritt "Wasserzulauf" ausgewählt, was durch die farbige Hinterlegung (im Bild grau) angezeigt wird.

Bei Auswahl öffnet sich das rechte Fenster mit der Überschrift: "Zulauf öffnen, Tiegel befüllen". Auf der linken Seite dieses Fensterskann die Temperatur ausgewählt werden. In der Mitte kann walzenartig eine relative Befüllmenge angewählt werden, beispielsweise, wie dargestellt ¼ Befüllung des Garraums.

Rechts davon kann alternativ die walzenartige Darstellung mit drei Walzen so gescrollt werden bis die gewünschte absolute Befüllmenge erscheint. Im dargestellten Beispielsfall gemäß Fig. 4 sind 20 Liter eingestellt.

Mit der vorliegenden Erfindung wird somit ein sehr komfortables Verfahren zum automatischen Befüllen eines Garraums mit Wasser einschließlich einer perfekten Übertragbarkeit von Daten und Programmen von einem Gargerät auf ein anderes, insbesondere eines mit unterschiedlichem Garraum geschaffen. Diese unterschiedlichen Garräume können auch in einem Gerät mit mehreren Garräumen vorhanden sein. Das erfindungsgemäße Gargerät eignet sich besonders für die Durchführung des erfindungsgemäßen Verfahrens in allen seinen Facetten.

**Patentansprüche**

1. Verfahren zum automatischen Befüllen eines Gargefäßes eines Gargeräts, das einen für Fluide geeigneten Garraum aufweist, wobei das Gargerät eine elektronische Gerätesteuerung aufweist, die einen Permanentspeicher aufweist, in dem Garabläufe gespeichert werden können und in dem das Nennvolumen des Gargeräts abgespeichert ist, und das eine steuerbare Fluidbefülleinrichtung aufweist, die zur Befüllung des Garraums mit der entsprechenden Flüssigkeitsmenge dient,
**dadurch gekennzeichnet, dass** das Verfahren die folgenden Schritte aufweist:

   - Auswählen und Speichern des Befüllgrades des Gargefäßes relativ zum Nennvolumen des Gargefäßes,
   - Errechnen der Sollmenge der gewünschten Befüllung durch Multiplizieren des Nennvolumens mit dem relativen Befüllgrad, und
   - Übermitteln des errechneten Sollmengenwertes an die Fluidbefülleinrichtung.

2. Verfahren nach Anspruch 1, **dadurch gekennzeichnet, dass** das abgespeicherte Garprogramm mit dem ausgewählten Befüllgrad auf die Gerätesteuerung eines weiteren Gargeräts übertragen wird und ein neuer Sollmengenwert errechnet wird, sofern das Nennvolumen des weiteren Gerätes vom Nennvolumen des vorherigen Gargeräts abweicht.

3. Verfahren zum automatischen Befüllen eines Gargefäßes eines Gargeräts, das einen für Fluide geeigneten Garraum aufweist, wobei das Gargerät eine elektronische Gerätesteuerung aufweist, die einen Permanentspeicher aufweist, in dem Garabläufe gespeichert werden können und in dem das Nennvolumen des Gargeräts abgespeichert ist, und das eine steuerbare Fluidbefülleinrichtung aufweist, die zur Befüllung des Garraums mit der entsprechenden Flüssigkeitsmenge dient
**dadurch gekennzeichnet, dass** das Verfahren die folgenden Schritte aufweist:

- Auswählen und Speichern der absoluten Befüllmenge des Gargefäßes in einem Garprogramm,
- Übertragen des absoluten ausgewählten Befüllmengenwertes in die Gerätesteuerung bzw. in das entsprechende Garprogramm eines weiteren Gargerätes,
- wobei ein neuer absoluter Befüllmengenwert in Abhängigkeit des Nennvolumens des weiteren Gargerätes errechnet wird, sofern sich das Nennvolumen des weiteren Gargerätes vom Nennvolumen des vorherigen Gargerätes unterscheidet, und
- Übermitteln des, gegebenenfalls neuen, absoluten Mengenwertes an die Fluidbefülleinrichtung.

4. Verfahren nach Anspruch 3, **dadurch gekennzeichnet, dass** der neue absolute Befüllmengenwert durch Mutiplizieren des alten absoluten Befüllmengenwertes mit dem Verhältnis aus neuem Nennvolumen zu dem alten Nennvolumen errechnet wird.

5. Verfahren nach einem der Ansprüche 1 bis 4, **dadurch gekennzeichnet, dass** die Befüllmenge als absolute Füllhöhe des Gargefäßes gespeichert wird.

6. Verfahren nach einem der Ansprüche 1 bis 5, **dadurch gekennzeichnet, dass** die gewünschte Befüllmenge durch die Gerätesteuerung auf Plausibilität überprüft wird.

7. Verfahren nach einem der Ansprüche 1 bis 6, **dadurch gekennzeichnet, dass** bei Überschreiten der möglichen Füllhöhe eine Warnmeldung ausgegeben wird und dem Benutzer die Gelegenheit gegeben wird, das Garprogramm zu editieren.

8. Gargerät (1) mit wenigstens einem Gargefäß (3), insbesondere in Form eines Tiegels, das einen für Fluide geeigneten Garraum (13) aufweist, und das insbesondere zur Durchführung des Verfahrens nach einem der Ansprüche 1 bis 6 geeignet ist, mit einer elektronischen Gerätesteuerung, die einen Permanentspeicher aufweist, in dem Garabläufe gespeichert werden können, und mit einer Fluid-, insbesondere Wasserbefülleinrichtung (21), die zur Befüllung des Garraums (13) mit der entsprechenden Flüssigkeitsmenge dient,
**dadurch gekennzeichnet,**
**dass** in der Gerätesteuerung das Nennvolumen des Gargefäßes (3) gespeichert ist,
**dass** in einem Befüllschritt des Garprogramms der Befüllgrad relativ zum Nennvolumen des Gargefäßes (3) oder die absolute Befüllmenge gespeichert wird, und
**dass** die Gerätesteuerung die Sollmenge der gewünschten Befüllung durch Multiplizieren des Nennvolumens mit dem relativen Befüllgrad, der in dem Garprogramm gespeichert wurde, errechnet, und diesen Wert oder die direkt eingegebene Befüllmenge an die Fluidbefülleinrichtung (21) übermittelt.

9. Gargerät nach Anspruch 8, **dadurch gekennzeichnet, dass** bei gespeichertem Wert der absoluten Befüllmenge die Gerätesteuerung eine Überprüfung des eigenen Nennvolumens zu dem Nennvolumen des vorherigen Gargeräts durchführt und in der Lage ist, gegebenenfalls eine Anpassung des absoluten Befüllmengenwertes vorzunehmen.

10. Gargerät nach Anspruch 8 oder 9, **dadurch gekennzeichnet, dass** die Befüllmenge als absolute Befüllhöhe des Gargefäßes (3) gespeichert wird.

11. Gargerät nach einem der Ansprüche 8 bis 10, **dadurch gekennzeichnet, dass** die Gerätesteuerung die gewünschte Befüllmenge auf Plausibilität überprüft.

12. Gargerät nach Anspruch 10 oder 11, **dadurch gekennzeichnet, dass** bei Überschreiten der möglichen Füllhöhe das Gargerät eine Warnmeldung ausgibt und dem Benutzer die Gelegenheit gibt, das Garprogramm zu editieren.

13. Gargerät nach einem der Ansprüche 8 bis 12, welches wenigstens ein zweites Gargefäß aufweist, das ein zum ersten Gargerät unterschiedliches Nennvolumen aufweist, **dadurch gekennzeichnet, dass** die Befüllmenge entsprechend dem gewünschten Befüllgrad für das zweite Gargefäß von der Gerätesteuerung errechnet und dieser Wert der Fluidbefülleinrichtung (21) übermittelt wird.

14. Gargerät nach einem der Ansprüche 8 bis 13, das eine Medienschnittstelle (25) aufweist, die zum Empfang externer Daten geeignet ist, **dadurch gekennzeichnet, dass** nach Empfang der Daten des gewünschten Befüllgrades diese mit dem Nennvolumen des Gargefäßes abgeglichen werden und die Gerätesteuerung ein entsprechendes Signal an die Fluidbefüllungseinrichtung (21) ausgibt.

15. Gargerät nach einem der Ansprüche 8 bis 14, das wenigstens eine Bedien-und Anzeigeeinrichtung (23), bevorzugt ausgebildet als Touchscreen aufweist, **dadurch gekennzeichnet, dass** die Darstellung des Wasserzulaufs (Fig. 4) verschiedene Einstellmöglichkeiten umfasst:

   - Temperatur des Zulaufwassers, und/oder
   - relative Befüllmengeneinstellung über Anteile der maximalen Befüllung, und/oder
   - absolute Befüllmengeneinstellung durch die Eingabe per Liter, und/oder
   - Befüllmengeneinstellung durch Eingabe des gewünschten Füllstands im Garraum.

16. Gargerät nach Anspruch 15, **dadurch gekennzeichnet, dass** die Darstellung des Wasserzulaufs (Fig. 4) animiert und/oder walzenähnlich erfolgt.

## Claims

1. Method for automatically filling a cooking pan of a cooking device, which has a cooking chamber suitable for liquids, wherein the cooking device has an electronic appliance control which has a permanent memory in which cooking cycles can be stored and in which the nominal volume of the cooking device is saved, and which has a controllable liquid filling device which serves to fill the cooking chamber with the corresponding amount of liquid, **characterised in that** the method contains the following steps:

   - selecting and storing the filling degree of the cooking vessel relative to the nominal volume of the cooking vessel,
   - calculating the ideal quantity of the desired filling by multiplying the nominal volume with the relative filling degree, and
   - transmitting the calculated ideal quantity value to the liquid filling device.

2. Method according to claim 1 **characterised in that** the stored cooking program is transferred with the selected filling degree to the appliance control of a further cooking device and a new ideal quantity value is calculated if the nominal volume of the further device deviates from the nominal volume of the previous cooking device.

3. Method for automatically filling a cooking vessel of a cooking device which has a cooking chamber suitable for liquids, wherein the cooking device has an electronic appliance control which has a permanent memory in which cooking cycles can be stored and in which the nominal volume of the cooking device is saved, and which has a controllable liquid filling device which serves to fill the cooking chamber with the corresponding amount of liquid, **characterised in that** the method contains the following steps:

   - selecting and memorizing the absolute filling volume of the cooking vessel in a cooking program,
   - transmitting the absolute selected filling volume value to the appliance control or to the corresponding cooking program respectively of a further cooking device,
   - wherein a new absolute filling volume value is calculated in dependence on the nominal volume of the further cooking device if the nominal value of the further cooking device differs from the nominal volume of the previous cooking device, and
   - transmitting the, where applicable new, absolute volume value to the liquid filling device.

4. Method according to claim 3 **characterised in that** the new absolute filling volume value is calculated by multiplying the old absolute filling volume value with the ratio from the new nominal volume to the old nominal value.

5. Method according to one of claims 1 to 4 **characterised in that** the filling volume is stored as the absolute filling level of the cooking vessel.

6. Method according to one of claims 1 to 5 **characterised in that** the desired filling volume is checked for plausibility by the appliance control.

7. Method according to one of claims 1 to 6 **characterised in that** on exceeding the possible filling level a warning is issued and the user is given the opportunity of editing the cooking program.

8. Cooking device (1) with at least one cooking vessel (3), more particularly in the form of a pot, which has a cooking chamber (13) suitable for liquids, and which is suitable in particular for carrying out the method according to one of claims 1 to 6, with an electronic appliance control which has a permanent memory in which cooking cycles can be stored, and with a liquid, more particularly a water, filling device (21) which serves for filling the cooking chamber (13) with the corresponding amount of fluid, **characterised in**
**that** the nominal volume of the cooking vessel (3) is stored in the appliance control, that the filling degree relative to the nominal volume of the cooking vessel (3) or the absolute filling volume is stored in a filling step of the cooking program, and
**that** the appliance control calculates the ideal amount of the desired filling by multiplying the nominal volume with the relative filling degree, which was stored in the cooking program, and transmits this value or the directly inputted filling volume to the liquid filling device (21).

9. Cooking device according to claim 8 **characterised in that** in the case of the stored value of the absolute filling volume the appliance control carries out a check on the particular nominal volume to the nominal volume of the previous cooking device and is in a position to undertake where necessary an adaption of the absolute filling volume value.

10. Cooking device according to claim 8 or 9 **characterised in that** the filling volume is stored as an absolute filling level of the cooking vessel (3).

11. Cooking device according to one of claims 8 to 10 **characterised in that** the appliance control checks the desired filling amount for plausibility.

12. Cooking device according to claim 10 or 11 **characterised in that** in the event of exceeding the possible filling level the cooking device issues a warning and gives the user the possibility of editing the cooking program.

13. Cooking device according to one of claims 8 to 12 which has at least one second cooking vessel which has a nominal volume which is different from the first cooking device, **characterised in that** the filling volume is calculated by the appliance control corresponding to the desired filling degree for the second cooking vessel and this value is sent to the liquid filling device (21).

14. Cooking device according to one of claims 8 to 13 which has a media interface (25) which is suitable for receiving external data, **characterised in that** after receiving the data relating to the desired filling degree this is balanced with the nominal volume of the cooking vessel and the appliance control sends a corresponding signal to the liquid filling device (21).

15. Cooking device according to one of claims 8 to 14 which has at least one operating and indicator unit (23), preferably designed as a touch screen, **characterised in that** the representation of the water supply (Figure 4) comprises different setting possibilities:

   - temperature of the incoming water, and/or
   - setting relative filling volume over proportions of the maximum filling level and/or
   - setting absolute filling volume through input per litre, and/or
   - setting filling volume by inputting the desired filling level in the cooking chamber.

16. Cooking device according to claim 15 **characterised in that** the representation of the water supply (Figure 4) is carried out by animation and/or scrolling.

**Revendications**

1. Procédé de remplissage automatique d'un récipient de cuisson d'un appareil de cuisson, qui présente un compartiment de cuisson adapté à des fluides, l'appareil de cuisson présentant une commande d'appareil électronique qui présente une mémoire permanente, dans laquelle peuvent être mémorisés des processus de cuisson et dans laquelle est mémorisé le volume nominal de l'appareil de cuisson, et l'appareil de cuisson présentant un dispositif de remplissage de fluide contrôlable, qui sert au remplissage du compartiment de cuisson par la quantité de liquide correspondante,
**caractérisé en ce que** le procédé comprend les étapes suivantes :

- sélection et mémorisation du degré de remplissage du récipient de cuisson par rapport au volume nominal du récipient de cuisson,
- calcul de la quantité de consigne du remplissage souhaité par multiplication du volume nominal avec le degré de remplissage relatif, et
- transmission de la valeur quantitative de consigne calculée au dispositif de remplissage de fluide.

**2.** Procédé selon la revendication 1, **caractérisé en ce que** le programme de cuisson mémorisé, avec le degré de remplissage sélectionné, est transmis à la commande d'appareil d'un autre appareil de cuisson et une nouvelle valeur quantitative de consigne est calculée, dans la mesure où le volume nominal de l'autre appareil diffère du volume nominal de l'appareil de cuisson précédent.

**3.** Procédé de remplissage automatique d'un récipient de cuisson d'un appareil de cuisson, qui présente un compartiment de cuisson adapté à des fluides, l'appareil de cuisson présentant une commande d'appareil électronique qui présente une mémoire permanente, dans laquelle peuvent être mémorisés des processus de cuisson et dans laquelle est mémorisé le volume nominal de l'appareil de cuisson, et l'appareil de cuisson présentant un dispositif de remplissage de fluide contrôlable, qui sert au remplissage du compartiment de cuisson par la quantité de liquide correspondante,
**caractérisé en ce que** le procédé comprend les étapes suivantes :

- sélection et mémorisation de la quantité de remplissage absolue du récipient de cuisson dans un programme de cuisson,
- transmission de la valeur quantitative de remplissage sélectionnée absolue à la commande d'appareil ou au programme de cuisson correspondant d'un autre appareil de cuisson,
- une nouvelle valeur quantitative de remplissage absolue étant calculée en fonction du volume nominal de l'autre appareil de cuisson, dans la mesure où le volume nominal de l'autre appareil de cuisson est différent du volume nominal de l'appareil de cuisson précédent, et
- transmission de la valeur quantitative absolue, éventuellement nouvelle, au dispositif de remplissage de fluide.

**4.** Procédé selon la revendication 3, **caractérisé en ce que** la nouvelle valeur quantitative de remplissage absolue est calculée par multiplication de l'ancienne valeur quantitative de remplissage absolue avec le rapport du nouveau volume nominal sur l'ancien volume nominal.

**5.** Procédé selon l'une des revendications 1 à 4, **caractérisé en ce que** la quantité de remplissage est mémorisée en tant que hauteur de remplissage absolue du récipient de cuisson.

**6.** Procédé selon l'une des revendications 1 à 5, **caractérisé en ce que** la quantité de remplissage souhaitée est soumise à un contrôle de vraisemblance par la commande d'appareil.

**7.** Procédé selon l'une des revendications 1 à 6, **caractérisé en ce qu'**un message d'alarme est émis en cas de dépassement de la hauteur de remplissage possible et il est donné à l'utilisateur la possibilité de corriger le programme de cuisson.

**8.** Appareil de cuisson (1) avec au moins un récipient de cuisson (3), en particulier en forme d'un creuset, qui présente un compartiment de cuisson (13) adapté à des fluides, et qui se prête en particulier à la mise en oeuvre du procédé selon l'une des revendications 1 à 6, présentant une commande d'appareil électronique qui présente une mémoire permanente, dans laquelle peuvent être mémorisés des processus de cuisson, et avec un dispositif de remplissage de fluide, en particulier de remplissage d'eau (21), qui sert à remplir le compartiment de cuisson (13) par la quantité de liquide correspondante,
**caractérisé en ce que**
le volume nominal du récipient de cuisson (3) est mémorisé dans la commande d'appareil,
le degré de remplissage par rapport au volume nominal du récipient de cuisson (3) ou la quantité de remplissage absolue sont mémorisés dans une étape de remplissage du programme de cuisson, et
la commande d'appareil calcule la quantité de consigne du remplissage souhaité par multiplication du volume nominal avec le degré de remplissage relatif, qui a été mémorisé dans le programme de cuisson, et transmet cette valeur ou la quantité de remplissage directement introduite au dispositif de remplissage de fluide (21).

**9.** Appareil de cuisson selon la revendication 8, **caractérisé en ce que**, pour une valeur mémorisée de la quantité de remplissage absolue, la commande d'appareil exécute une vérification du volume nominal propre par rapport au volume nominal de l'appareil de cuisson précédent et est en mesure de procéder éventuellement à une adaptation de la valeur quantitative de remplissage absolue.

10. Appareil de cuisson selon l'une des revendications 8 et 9, **caractérisé en ce que** la quantité de remplissage est mémorisée en tant que hauteur de remplissage absolue du récipient de cuisson (3).

11. Appareil de cuisson selon l'une des revendications 8 à 10, **caractérisé en ce que** la commande d'appareil soumet à un contrôle de vraisemblance la quantité de remplissage souhaitée.

12. Appareil de cuisson selon l'une des revendications 10 et 11, **caractérisé en ce que** l'appareil de cuisson émet un message d'alarme en cas de dépassement de la hauteur de remplissage possible et donne à l'utilisateur la possibilité de corriger le programme de cuisson.

13. Appareil de cuisson selon l'une des revendications 8 à 12, qui présente au moins un second récipient de cuisson qui présente un volume nominal différent du premier appareil de cuisson, **caractérisé en ce que** la quantité de remplissage est calculée par la commande d'appareil pour le second récipient de cuisson, en conformité avec le degré de remplissage souhaité, et cette valeur est transmise au dispositif de remplissage de fluide (21).

14. Appareil de cuisson selon l'une des revendications 8 à 13, qui présente une interface de support (25) adaptée à la réception de données extérieures, **caractérisé en ce que**, après la réception des données du degré de remplissage souhaité, ces données sont ajustées sur le volume nominal du récipient de cuisson et la commande d'appareil transmet un signal correspondant au dispositif de remplissage de fluide (21).

15. Appareil de cuisson selon l'une des revendications 8 à 14, qui présente au moins un dispositif de commande et d'affichage (23), réalisé de préférence sous forme d'écran tactile, **caractérisé en ce que** la représentation de l'arrivée d'eau (figure 4) comprend différentes possibilités de réglage :

- température de l'eau d'admission, et/ou
- réglage relatif de la quantité de remplissage par rapport à des parts du remplissage maximal, et/ou
- réglage absolu de la quantité de remplissage par l'introduction par litre, et/ou
- réglage de la quantité de remplissage par introduction du niveau de remplissage souhaité dans le compartiment de cuisson.

16. Appareil de cuisson selon la revendication 15, **caractérisé en ce que** la représentation de l'arrivée d'eau (figure 4) s'effectue en animation et/ou à la manière de rouleaux.

**Fig. 1**

**Fig. 2**

```
                    ┌─────────────────────┐
                   (      Start            )  ─ 301
                    \  Garprogramm übertragen/
                     └──────────┬──────────┘
                                │
                                ▼
                    ┌─────────────────────┐
                    │ Einzufüllende Wassermenge ├─ 302
                    │  als Befüllgrad einstellen │
                    └──────────┬──────────┘
                                │
                                ▼
                         ◇───────────◇
                        ╱   Tiegelhöhe  ╲  ─ 303
                        ╲   abweichend?  ╱
                         ◇──────┬────◇──────────┐
                                │ Ja            │
                                ▼               │
                    ┌─────────────────────┐    │
                    │ Hinweis: Der Befüllgrad _ │ ─ 304
                    │  entspricht folgender      │
                    │     Füllhöhe _             │
                    └──────────┬──────────┘    │
                                │               │
                                ▼               │
                         ◇───────────◇          │
                        ╱   Programm   ╲ ─ 305   │
                    ┌──╲  editieren?   ╱         │
                    │   ◇──────┬────◇───Nein─────┤
                    │          │ Ja              │
  ┌──────────────┐  │          ▼                 │
  │ Hinweis: Die │  │    ◇───────────◇           │
  │ eingestellte │  │   ╱ max. Füllhöhe ╲ ─ 306  │ Nein
  │ Füllhöhe     │  │   ╲ eingehalten?  ╱        │
  │ übersteigt   │──┘──Nein─◇──┬────◇             │
  │ die max.     │           │ Ja                │
  │ Füllhöhe     │           ▼                    │
  │ Füllmenge >  │    ┌─────────────────┐ ─ 307  │
  │ max.  ─ 309  │    │ Weitere Garschritte ... │◄┘
  └──────────────┘    └────────┬────────┘
                                │
                                ▼
                    ┌─────────────────────┐
                   (      Ende             )  ─ 308
                    \  Garprogramm übertragen/
                     └─────────────────────┘
```

**Fig. 3**

13

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1716795 A